# EUROPEAN PATENT SPECIFICATION

(11) **EP 4 001 077 B1**
(45) Date of publication and mention of the grant of the patent: **12.06.2024**
(21) Application number: 21208753.0
(22) Date of filing: 17.11.2021
(51) Int. Cl.: B62J 43/16

(54) **ELECTRIC STRADDLE-TYPE VEHICLE WITH BATTERY**
ELEKTRISCHES GRÄTSCHZITZFAHRZEUG MIT BATTERIE
VEHICULE ELECTRIQUE DU TYPE A CHEVAUCHER AVEC BATTERIE

(30) Priority: 24.11.2020 JP 2020194483
(43) Date of publication of application: 25.05.2022
(73) Proprietor: Suzuki Motor Corporation, Shizuoka 432-8611 (JP)
(72) Inventor: NAGAYA, Keita, Hamamatsu-shi, Shizuoka, 432-8611 (JP)
(74) Representative: Haseltine Lake Kempner LLP

(56) References cited:
- EP-A1- 2 355 206
- EP-A1- 2 595 216
- EP-A1- 3 704 004
- US-A1- 2007 089 922

## Description

### TECHNICAL FIELD

The present invention relates to a battery.

### BACKGROUND ART

In recent years, an electric straddle-type vehicle that travels on electric power has been developed. As the electric straddle-type vehicle, a scooter-type vehicle in which a battery and the like are accommodated below a seat is known (for example, see Patent Literature 1). In the straddle-type vehicle disclosed in Patent Literature 1, a pair of left and right seat frames supporting the seat from below are provided, and the battery is installed inside the pair of seat frames. A battery module and a circuit component are accommodated in a battery case, and a plurality of fixing portions protruding from an outer surface of the battery case are screwed to the pair of seat frames via a bracket or the like.

### CITATION LIST

### PATENT LITERATURE

Patent Literature 1: JP-A-2017-081324
EP 2 355 206 A1 which shows the preamble of claim 1, discloses an apparatus in which An output terminal 7 has a circular cylindrical section and a non-circular cylindrical section, the front end is exposed outside the surface of the external case, and the aft end is attached to an output terminal lead-plate inside the external case. The external case has circular cylindrical through-holes to pass the circular cylindrical sections, and non-circular cylindrical through-holes to insert the non-circular cylindrical sections in a manner that does not rotate. Each metal rod has an O-ring disposed in a gasket groove, the O-ring seals the gap between the output terminal circular cylindrical section and the circular cylindrical through-hole in a water-tight configuration. The non-circular cylindrical section 70B inserts into the non-circular cylindrical through-hole to attach the output terminal to the external case in a manner that does not rotate.

### SUMMARY OF INVENTION

### TECHNICAL PROBLEM

In the electric straddle-type vehicle, the battery case is screwed to the seat frame, but since an impact is transmitted to the battery case via the seat frame during traveling, further improvement in a rigidity of the battery case is desired.

The present invention has been made in view of the above points, and an object of the present invention is to provide an electric straddle-type vehicle comprising a vehicle body frame with a battery, with the battery capable of ensuring a rigidity of the battery itself and further improving a rigidity of the entire electric straddle-type vehicle body.

### SOLUTION TO PROBLEM

The scope of the present invention is defined by the appended claims.

### ADVANTAGEOUS EFFECTS OF INVENTION

According to the battery of an aspect of the present invention, portions separated in a front and rear of the battery case are connected via the battery module, and portions separated in a front and rear of the vehicle body frame are connected via the battery case. A rigidity of the battery case with respect to a load in the front-rear direction is increased by a rigidity of the battery module, and a rigidity of the vehicle body frame with respect to the load in the front-rear direction is increased by the rigidities of the battery case and the battery module. Therefore, the rigidity of the battery is ensured, and the rigidity of an entire vehicle is improved.

### BRIEF DESCRIPTION OF DRAWINGS

[Fig. 1] Fig. 1 is a side view of a straddle-type vehicle according to the present embodiment.
[Fig. 2] Fig. 2 is a right side view of a vehicle body frame and an electric device according to the present embodiment.
[Fig. 3] Fig. 3 is a perspective view of the vehicle body frame and a battery according to the present embodiment as viewed from a right front side.
[Fig. 4] Fig. 4 is a perspective view of the vehicle body frame and the battery according to the present embodiment as viewed from a left front side.
[Fig. 5] Fig. 5 is a left side view of a case half body on a right side according to the present embodiment.
[Fig. 6] Fig. 6 is a left side view of the battery from which a case half body on a left side is detached according to the present embodiment.
[Fig. 7] Fig. 7 is a plan view of the battery from which the case half body on the left side is detached according to the present embodiment.
[Fig. 8] Fig. 8 is a plan view of the vehicle body frame and the battery according to the present embodiment.
[Fig. 9] Fig. 9 is a left side view of the vehicle body frame and the battery according to the present embodiment.
[Fig. 10] Fig. 10 is a left side view in which a fuse cover is detached from Fig. 9.

### DESCRIPTION OF EMBODIMENTS

A battery according to an aspect of the present invention is fixed to a vehicle body frame of an electric straddle-type vehicle. A battery module to which electric power for traveling is charged is accommodated in a battery case of the battery. A front side case fixing portion and a rear side case fixing portion fixed at portions separated in a front-rear direction of the vehicle body frame are formed on an outer surface of the battery case, and portions separated in a front and rear of the vehicle body frame are connected via the battery case. A front side module fixing portion and a rear side module fixing portion that fix a front side and a rear side of the battery module are formed on an inner surface of the battery case, and portions separated in a front and rear of the battery case are connected via the battery module. A rigidity of the battery case with respect to a load in the front-rear direction is increased by a rigidity of the battery module, and a rigidity of the vehicle body frame with respect to the load in the front-rear direction is increased by the rigidities of the battery case and the battery module. Therefore, a rigidity of the battery is ensured, and a rigidity of an entire vehicle is improved.

### [Example]

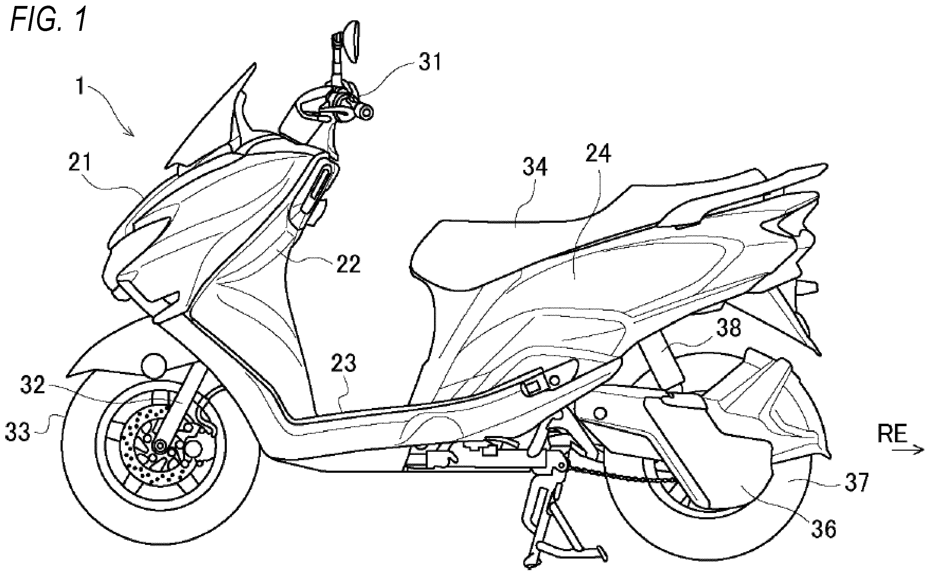

Hereinafter, the present embodiment will be described in detail with reference to the accompanying drawings. In the present embodiment, the straddle-type vehicle is a straddle-type vehicle an electric type. In addition, in the following drawings, an arrow FR indicates a vehicle front side, an arrow RE indicates a vehicle rear side, an arrow L indicates a vehicle left side, and an arrow R indicates a vehicle right side. Fig. 1 is a left side view of the straddle-type vehicle according to the present embodiment.

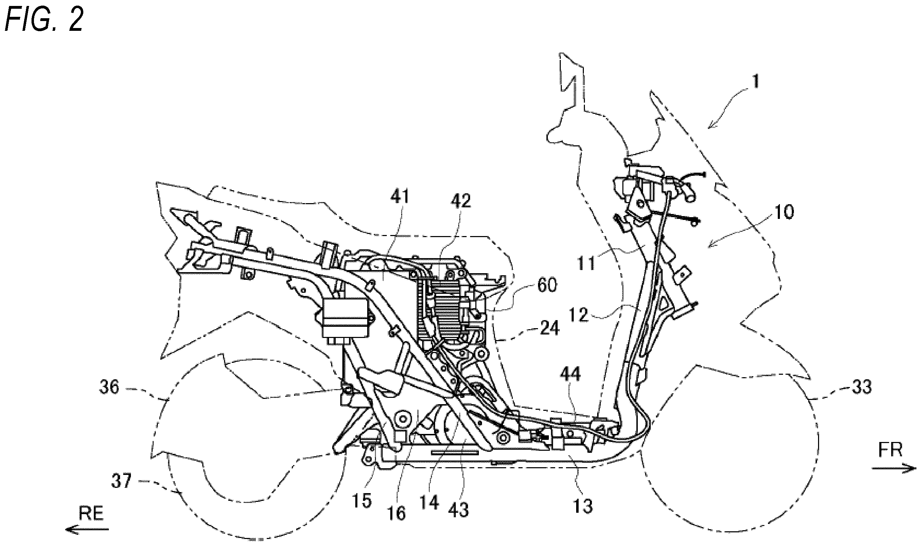

As shown in Fig. 1, a straddle-type vehicle 1 of a scooter type is formed by attaching various covers to an underbone type vehicle body frame 10 (see Fig. 2) as a vehicle body exterior. A front frame cover 21 is provided on a front side of a vehicle, and a leg shield 22 that protects legs of a rider is provided on a rear side of the front frame cover 21. A footboard 23 extends rearward from a lower end of the leg shield 22, and a seat frame cover 24 is provided on a rear side of the footboard 23. A foot rest space for the rider is formed in front of a seat 34 by the leg shield 22 and the footboard 23.

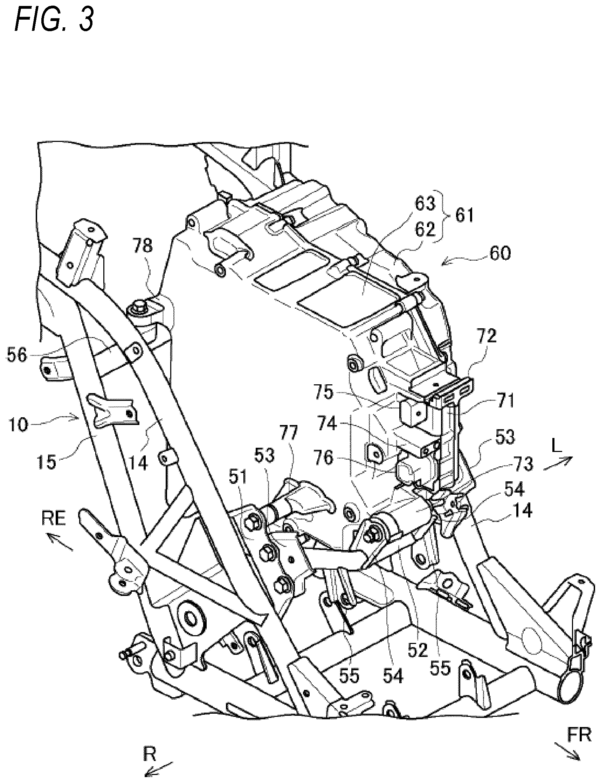

A handle 31 is provided on an upper side of the front frame cover 21, and a front wheel 33 is rotatably supported on a lower side of the front frame cover 21 via a pair of front forks 32. The seat 34 is provided on an upper side of a seat frame cover 24, and a swing arm (not shown) covered by a swing arm cover 36 is provided on a lower side of the seat frame cover 24. A rear wheel 37 is rotatably supported at a rear portion of the swing arm, and a rear portion of the swing arm is connected to the vehicle body frame 10 via a suspension 38. A battery 60 (see Fig. 3) is accommodated below the seat 34.

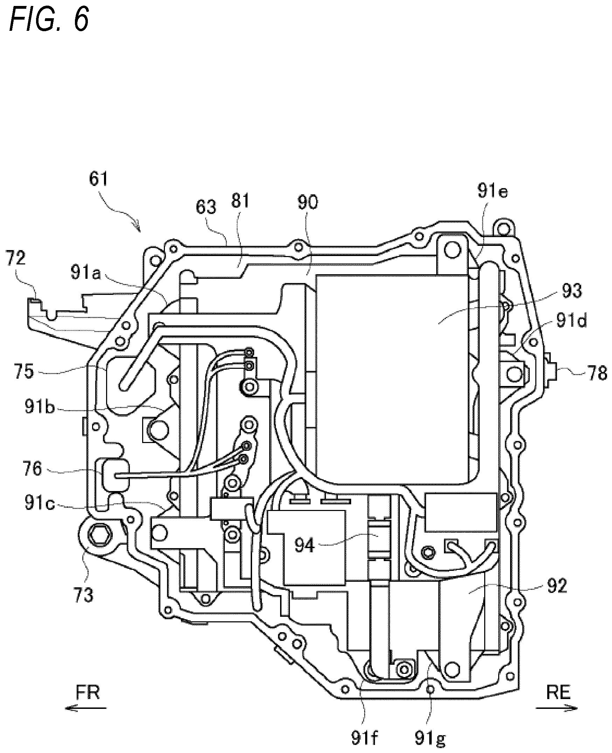

In such a straddle-type vehicle 1, the battery 60 is fixed to the vehicle body frame 10, so that a rigidity of the entire vehicle body frame 10 is improved by a rigidity of a battery case 61 (see Fig. 3). In order to ensure further rigidity of the vehicle body frame 10, a material changes and the like of the vehicle body frame 10 and the battery case 61 are required, and a cost increases. Therefore, in the present embodiment, the rigidity of the battery case 61 is ensured by utilizing a rigidity of a battery module 90 (see Fig. 6) accommodated inside the battery case 61, and the rigidity of the vehicle body frame 10 is improved by utilizing the rigidities of the battery module 90 and the battery case 61.

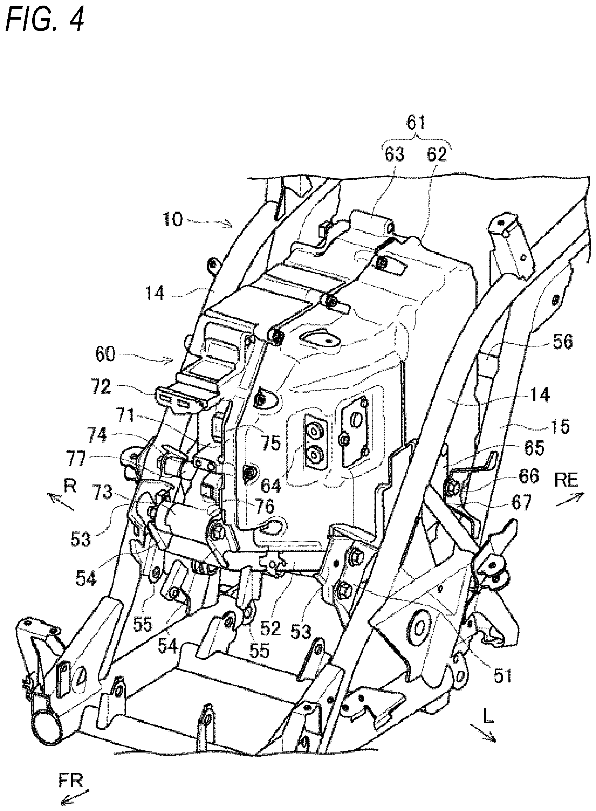

Hereinafter, a vehicle body frame and a battery of the present embodiment will be described with reference to Figs. 2 to 4. Fig. 2 is a right side view of the vehicle body frame and an electric device according to the present embodiment. Fig. 3 is a perspective view of the vehicle body frame and the battery according to the present embodiment as viewed from a right front side. Fig. 4 is a perspective view of the vehicle body frame and the battery according to the present embodiment as viewed from a left front side. Figs. 3 and 4 show a state in which the electric device other than the battery is detached from the vehicle body frame.

As shown in Fig. 2, a head pipe 11 into which a steering shaft (not shown) is inserted is provided in a front portion of the vehicle body frame 10. A front frame 12 extends downward from the head pipe 11, and a pair of lower frames 13 extend rearward from a lower portion of the front frame 12. A pair of seat frames 14 rise obliquely rearward from substantially middle portions of the pair of lower frames 13, and a pair of support frames 15 rise obliquely rearward from rear portions of the pair of lower frames 13. Rear portions of the pair of support frames 15 are connected to rear portions of the pair of seat frames 14 from below.

An accommodation space of the battery 60 is formed between the pair of seat frames 14 and the pair of support frames 15, that is, inside the seat frame cover 24. A charger 41 that converts power source power into DC power having a predetermined voltage, the battery 60 that is charged with the DC power from the charger 41, and a DC-DC converter 42 that steps down a voltage of the DC power are installed on an upper side of an installation space. A motor 43 that is driven by AC power is installed in a lower portion of the installation space. An inverter 44 that converts the DC power into AC power is installed in front of the motor 43, and the motor 43 is connected to the battery 60 via the inverter 44.

The pair of seat frames 14 and the pair of support frames 15 are connected to each other in a front-rear direction via a pair of pivot brackets 16. The swing arm (not shown) is connected to the pair of pivot brackets 16 so as to be swingable in an upper-lower direction, and the swing arm cover 36 is attached to the swing arm as described above. A sprocket (not shown) and a chain (not shown) of the motor 43 are covered by the swing arm cover 36. Electric power of the battery 60 is supplied to the motor 43, and a drive force is output from the motor 43 to the rear wheel 37 via the sprocket and the chain.

As shown in Figs. 3 and 4, the accommodation space of the battery 60 is formed below the seat 34 (see Fig. 1) between the pair of seat frames 14 and the pair of support frames 15. A pair of holder plates 51 are provided on the seat frames 14, and a front side bridge 52 extending in a vehicle width direction is fixed to the pair of holder plates 51. The pair of seat frames 14 are connected via the pair of holder plates 51 and the front side bridge 52. The battery 60 is attached to an upper side of the front side bridge 52, and the motor 43 (see Fig. 2) is attached to a lower side of the front side bridge 52.

A pair of holder brackets 53 are provided at both ends of the front side bridge 52, and the pair of holder brackets 53 are fixed to the pair of holder plates 51. The pair of holder plates 51 protrude forward than the pair of seat frames 14, and the pair of holder brackets 53 protrude forward than the pair of holder plates 51. The front side bridge 52 is positioned forward than the seat frame 14 by the pair of holder brackets 53 and the pair of holder plates 51. The front side bridge 52 is curved forward from the pair of holder brackets 53 on an outer side in the vehicle width direction toward an inner side in the vehicle width direction so as not to interfere with a lower front side of the battery 60.

The front side bridge 52 is provided with a pair of battery brackets 54 and a pair of motor brackets 55 spaced apart in the vehicle width direction. The pair of battery brackets 54 protrude upward from the front side bridge 52 to support the battery 60 from below, and the pair of motor brackets 55 protrude downward from the front side bridge 52 to support the motor 43 from above. Base end portions of the brackets 54, 55 are joined to a surface of the front side bridge 52, and tip end portions of the brackets 54, 55 have mounting holes for screwing. The pair of battery brackets 54 support the battery 60 near a center of the front side bridge 52, and the pair of motor brackets 55 support the motor 43 on the outer side in the vehicle width direction of the pair of battery brackets 54. The pair of support frames 15 are connected via a rear side bridge 56 that extends in the vehicle width direction on a rear side of the battery 60.

The battery case 61 of the battery 60 has a left and right split structure, and includes a case half body (second case half body) 62 on a left side and a case half body (first case half body) 63 on a right side. The case half body 62 on the left side is formed in a box shape with a right side opened, and the case half body 63 on the right side is formed in a box shape with a left side opened. The case half body 62 on the left side is positioned to a left side of the accommodation space, and the case half body 63 on the right side is positioned at a center of the accommodation space. A total dimension of the left and right case half bodies 62, 63 in the vehicle width direction is smaller than dimensions of the case half bodies 62, 63 in a vehicle length direction and a height direction. The battery 60 is mounted on the vehicle body frame 10 such that a lateral direction is oriented in the vehicle width direction.

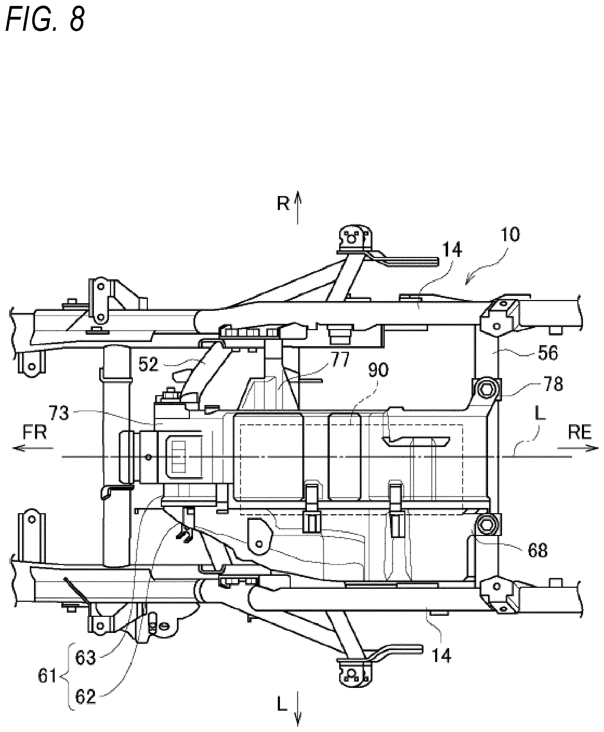

A front surface of the case half body 62 on the left side is inclined such that a dimension in the vehicle width direction increases from the vehicle front side toward the vehicle rear side. A pair of high voltage harness connectors 64 are provided on the front surface of the case half body 62 on the left side. A fuse cover 65 is attached to a lower portion on a left side surface of the case half body 62 on the left side. A left side case fixing portion 66 is formed in the vicinity of the fuse cover 65 on the left side surface of the case half body 62, and the left side case fixing portion 66 is fixed to the support frame 15 on the left side via a left side bracket 67. A rear side case fixing portion 68 (see Fig. 8) protrudes rearward from a rear surface of the case half body 62, and the rear side case fixing portion 68 is fixed to the rear side bridge 56.

From a front surface of the battery 60, a vicinity of mating surfaces of the left case half body 62 and the right case half body 63 protrudes forward to form a vertically long protruding portion 71. A seat connecting portion 72 protrudes forward from an upper portion of a front surface of the case half body 63 on the right side, and a front side case fixing portion 73 protrudes forward from a lower portion of the front surface of the case half body 63. A partition wall 74 that divides a space on a right side of the protruding portion 71 into an upper space and a lower space is formed in a central portion of the front surface of the case half body 63. A low voltage harness connector 75 is provided on a right side surface of the protruding portion 71 between the seat connecting portion 72 and the partition wall 74, and a high voltage harness connector 76 is provided on the right side surface of the protruding portion 71 between the partition wall 74 and the front side case fixing portion 73.

A seat hinge bracket (not shown) fixed to the seat 34 is swingably supported on the seat connecting portion 72. The seat 34 is supported from below by the battery 60 inside the seat frame cover 24 (see Fig. 1) via the seat hinge bracket. When the seat 34 is opened with a front end portion of the battery 60 as a fulcrum, the battery 60 inside the seat frame cover 24 is exposed to the outside. Since the seat connecting portion 72 is integrally formed in the case half body 63 on the right side, a supporting rigidity of the seat connecting portion 72 with respect to a downward load from the seat 34 is increased in a state where the seat 34 is opened.

The front side case fixing portion 73 is formed in a cylindrical shape with a mounting hole penetrating in the vehicle width direction. A long bolt is inserted into the mounting hole of the front side case fixing portion 73 and mounting holes of the pair of battery brackets 54, and the front side case fixing portion 73 is fixed to the pair of battery brackets 54 via the long bolt. A right side case fixing portion 77 protrudes rightward from a vicinity of the front side case fixing portion 73 on a right side surface of the case half body 63 on the right side, and a rear side case fixing portion 78 protrudes rightward from a vicinity of a rear end of the right side surface of the case half body 63 on the right side. The right side case fixing portion 77 is fixed to the holder plate 51 on the right side, and the rear side case fixing portion 78 is fixed to the rear side bridge 56.

Thus, the front side case fixing portion 73 and the rear side case fixing portions 68, 78 fixed at portions separated in the front-rear direction of the vehicle body frame 10 are formed on an outer surface of the battery case 61. The front side case fixing portion 73 is fixed to the front side bridge 52, the rear side case fixing portions 68, 78 are fixed to the rear side bridge 56, and the front side bridge 52 and the rear side bridge 56 separated in the front-rear direction of the vehicle body frame 10 are connected via the battery case 61. The front side bridge 52 and the rear side bridge 56 are integrated via the battery 60, and the rigidity of the vehicle body frame 10 with respect to a load in the front-rear direction is increased by a rigidity of the battery 60.

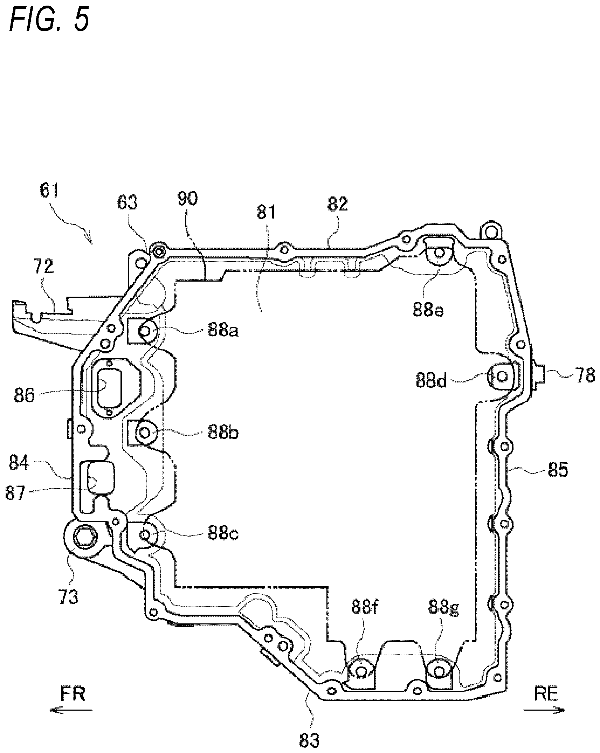

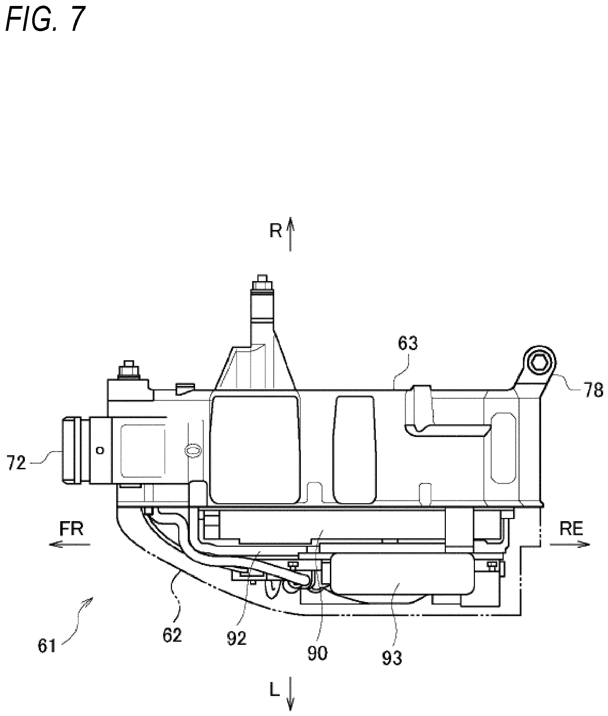

Hereinafter, a detailed configuration of the battery will be described with reference to Figs. 5 to 7. Fig. 5 is a left side view of the case half body on the right side according to the present embodiment. Fig. 6 is a left side view of the battery from which the case half body on the left side is detached according to the present embodiment. Fig. 7 is a plan view of the battery from which the case half body on the left side is detached according to the present embodiment.

As shown in Fig. 5, the case half body 63 on the right side includes a right side wall 81 that is wide in the upper-lower direction and the front-rear direction, an upper wall 82 that extends in the vehicle width direction from an outer edge of the right side wall 81, a bottom wall 83, a front wall 84, and a rear wall 85. On an inner surface of the right side wall 81, connector openings 86 and 87 for the harness connectors 75 and 76 (see Fig. 6) which are vertically spaced apart from each other are formed in the vicinity of the front wall 84, and front side module fixing portions 88a to 88c which are vertically disposed adjacent to the connector openings 86 and 87 are formed. On the inner surface of the right side wall 81, a rear side module fixing portion 88d is formed along the rear wall 85, an upper side module fixing portion 88e is formed along the upper wall 82, and lower side module fixing portions 88f, 88g are formed along the bottom wall 83.

Thus, on an inner surface of the case half body 63 on the right side, the front side module fixing portions 88a to 88c that fix a front side of the battery module 90 and the rear side module fixing portion 88d that fixes a rear side of the battery module 90 are formed. On the inner surface of the case half body 63, the upper side module fixing portion 88e that fixes an upper side of the battery module 90 and the lower side module fixing portions 88f, 88g that fix a lower side of the battery module 90 are formed. The battery module 90 is fixed to the case half body 63 on the right side over an entire circumference, and a rigidity of the case half body 63 with respect to a load in the front-rear direction and the upper-lower direction is increased by the rigidity of the battery module 90.

The front side module fixing portion 88a is formed on an opposite side of the seat connecting portion 72 with the front wall 84 interposed therebetween. The seat connecting portion 72 is reinforced by the rigidity of the battery module 90, and a rigidity of the seat connecting portion 72 with respect to a load from a seat 34 side is improved. The front side module fixing portion 88c is formed on an opposite side of the front side case fixing portion 73 with the front wall 84 interposed therebetween, and the rear side module fixing portion 88d is formed on an opposite side of the rear side case fixing portion 78 with the rear wall 85 interposed therebetween. The front side case fixing portion 73 and the rear side case fixing portion 78 are reinforced by the rigidity of the battery module 90, and a rigidity of a fixing position of the battery 60 with respect to the vehicle body frame 10 is increased.

As shown in Figs. 6 and 7, the battery module 90, various electronic components, and various circuit components are accommodated in the battery case 61. The battery module 90 is formed in a box shape in which a plurality of battery cells are electrically connected and a plurality of battery cells are stacked. The battery module 90 is charged with electric power for traveling. An outer edge of the battery module 90 is formed along a peripheral wall of the case half body 63, and is formed in a stepped shape in which a rear side of a lower edge is positioned below a front side of the lower edge of the battery module 90. The outer edge of the battery module 90 is provided with attachment portions 91a to 91g fixed to the respective module fixing portions 88a to 88g (see Fig. 5).

A right side of the battery module 90 is in contact with the right side wall 81 of the case half body 63 on the right side via a heat transfer sheet (not shown). A left side of the battery module 90 protrudes leftward from the case half body 63, and a plate-shaped module bracket (bracket) 92 is positioned on a left side of the battery module 90. The module bracket 92 is fixed to any number of the plurality of module fixing portions 88a to 88g (see Fig. 5) of the case half body 63 on the right side. An electronic component such as a battery control device 93 that controls the battery 60 and a relay that relays electric power, and a circuit component such as a fuse 94 to be cut by an overcurrent are attached to a left side surface of the module bracket 92.

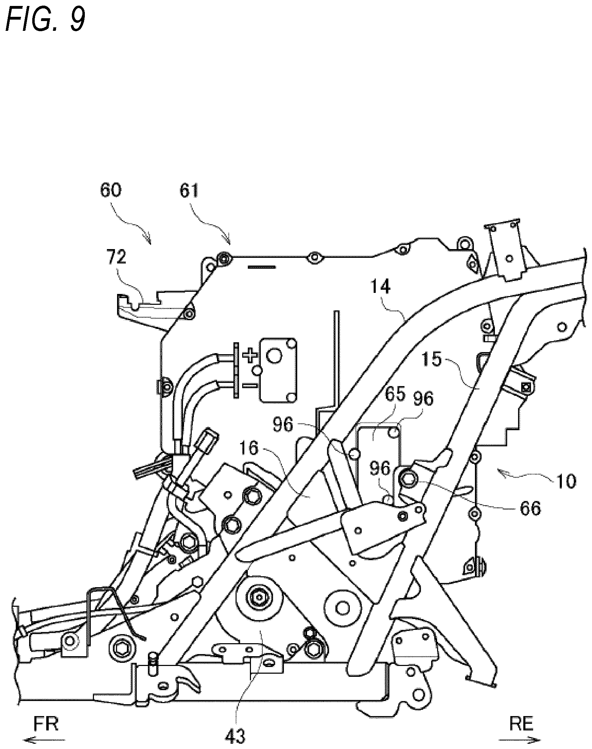

In a side view, the battery control device 93 is provided so as to overlap an upper side of a rear portion of the battery module 90, and the fuse 94 is provided so as to overlap a lower side of the rear portion of the battery module 90. The fuse 94 is positioned below the battery module 90 and is positioned on a rear side of the fuse cover 65 (see Fig. 9). In the side view, other electronic components and circuit components also overlap the battery module 90, and are installed inside a projection surface of a left side surface of the battery module 90. Therefore, the battery module 90, the electronic component, and the circuit component are compactly accommodated inside the battery case 61.

The electronic component and the circuit component on the module bracket 92 are covered by the case half body 62 on the left side. At this time, the battery module 90, which is a heavy object, the electronic component and the circuit component on the module bracket 92 are attached to the case half body 63 on the right side, and loads of the battery module 90, the electronic component, and the circuit component do not act on the case half body 62 on the left side. Therefore, the case half body 62 on the left side may be spaced apart from each component inside the case, and a degree of freedom in a shape of the case half body 62 on the left side is increased. It is also possible to prioritize weight reduction over a strength of the case half body 62.

A support structure of the battery will be described with reference to Fig. 8. Fig. 8 is a plan view of the vehicle body frame and the battery according to the present embodiment. Fig. 8 shows a state in which the electric device other than the battery is detached from the vehicle body frame.

As shown in Fig. 8, the front side case fixing portion 73 of the battery case 61 is fixed to the front side bridge 52 of the vehicle body frame 10, and the rear side case fixing portions 68, 78 of the battery case 61 are fixed to the rear side bridge 56 of the vehicle body frame 10. By connecting the front side bridge 52 and the rear side bridge 56 via the battery case 61, the rigidity of the vehicle body frame 10 is improved by the rigidity of the battery case 61. In order to further improve the rigidity of the vehicle body frame 10, it is necessary to increase the rigidity of the battery case 61 itself by utilizing the rigidity of the battery module 90 fixed inside the battery case 61.

Usually, the battery module 90 is fixed inside the battery case 61 with a buffer material interposed therebetween, and the battery module 90 is not directly fixed inside the battery case 61. In the present embodiment, the battery module 90 is directly fixed inside the battery case 61, and the battery case 61 is supported from inside by the battery module 90, so that the rigidity of the battery case 61 itself is increased. By utilizing the rigidity of the battery module 90, a material cost does not increase for increasing a material strength of the battery case 61. Assembling the buffer material to the battery case 61 becomes unnecessary, and an assembling work is simplified.

Since the heavy battery module 90 is accommodated inside the battery case 61, it is necessary to balance left and right weights in order to maintain a steering stability of the straddle-type vehicle 1. Therefore, the case half body 63 on the right side of the battery case 61 is positioned in a center, and the battery module 90 fixed to the case half body 63 overlaps a center line L extending in a vehicle front-rear direction together with the case half body 63. Left and right weight balances of the straddle-type vehicle 1 are brought close to uniform, the steering stability is improved, a restoring force when the straddle-type vehicle 1 is tilted to the left or right is brought close to uniform, and a turning performance during cornering is improved.

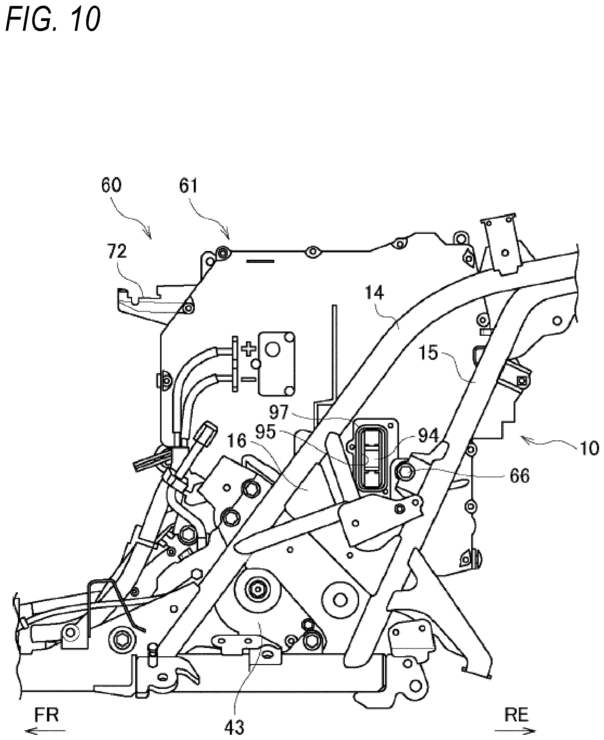

A fuse replacement operation will be described with reference to Figs. 9 and 10. Fig. 9 is a left side view of the vehicle body frame and the battery according to the present embodiment. Fig. 10 is a left side view in which a fuse cover is detached from Fig. 9.

As shown in Fig. 9, the battery case 61 is installed between the pair of seat frames 14 and the pair of support frames 15. In the side view, the pair of seat frames 14 extend obliquely upward from the vehicle front side toward the vehicle rear side so as to pass through a center of the battery 60. In the side view, the pair of support frames 15 extend obliquely upward from the vehicle front side toward the vehicle rear side so as to pass through a lower side of a rear portion of the battery case 61. The support frame 15 is connected to the seat frame 14 from a rear side of the battery case 61, and a lower side of the seat frame 14 and a lower side of the support frame 15 are connected via the pivot bracket 16.

An opening 95 (see Fig. 10) that exposes the fuse 94 (see Fig. 10) in the battery case 61 to the outside is formed in the battery case 61 (case half body 62). In the side view, the opening 95 is formed at a position avoiding the vehicle body frame 10, and the opening 95 is positioned inside the seat frame 14, the support frame 15, and the pivot bracket 16. Specifically, the opening 95 is positioned in a rear side of the pivot bracket 16 between the seat frame 14 and the support frame 15. The fuse cover 65 that covers the opening 95 is detachably attached to the battery case 61 by a plurality of small screws 96.

As shown in Fig. 10, an entry path of a tool such as a screwdriver is ensured among the seat frame 14, the support frame 15, and the pivot bracket 16. When the small screw 96 (see Fig. 9) of the fuse cover 65 is removed using the tool, the fuse 94 in the battery case 61 is exposed to the outside through the opening 95. When the fuse 94 is cut, the fuse 94 in the battery case 61 can be replaced through the opening 95. At this time, since the fuse 94 can be easily replaced in a state where the battery case 61 is fixed to the vehicle body frame 10, a work load of a replacement operation of the fuse 94 can be reduced.

In addition to the replacement operation of the fuse 94, when detaching the electric device such as the motor 43 or the inverter 44 (see Fig. 2) from the vehicle body frame 10, a high voltage circuit can be easily cut off by detaching the fuse 94 first. Since the fuse 94 of the battery 60 can be easily replaced, the number of components can be reduced by substituting the fuse 94 without providing a service plug in the battery 60. Since the opening 95 is formed below the battery case 61, the seat 34 is sufficiently separated from the fuse 94 to which a high voltage is applied, and a safety of the rider seated on the seat 34 is ensured.

Although the fuse cover 65 (see Fig. 9) is mounted in the vicinity of the opening 95 of the battery case 61, a rigidity of the vicinity of the opening 95 of the battery case 61 is lower than that of other portions. A left side of the opening 95 of the battery case 61 is protected by the seat frame 14, the support frame 15, and the pivot bracket 16, and a strong external force does not directly act on the vicinity of the opening 95 of the battery case 61. Therefore, deformation in the vicinity of the opening 95 of the battery case 61 is prevented, and a sealing performance of the opening 95 is increased by the fuse cover 65. An O-ring 97 that increases the sealing performance is attached to an opening edge portion of the battery case 61.

The opening edge portion of the battery case 61 is fixed to the support frame 15 via the left side case fixing portion 66. The vicinity of the opening 95 is reinforced by the left side case fixing portion 66, the deformation in the vicinity of the opening 95 of the battery case 61 is prevented, and the sealing performance of the opening 95 is increased by the fuse cover 65. The left side case fixing portion 66 that supports the battery case 61 is used to reinforce the vicinity of the opening 95 of the battery case 61. It is not necessary to increase a material strength in the vicinity of the opening 95 of the battery case 61 or to increase a thickness in the vicinity of the opening 95 of the battery case 61, and a cost for increasing a strength in the vicinity of the opening 95 of the battery case 61 is reduced.

As described above, according to the present embodiment, portions separated in a front and rear of the battery case 61 are connected via the battery module 90, and portions separated in a front and rear of the vehicle body frame 10 are connected via the battery case 61. The rigidity of the battery case 61 with respect to the load in the front-rear direction is increased by the rigidity of the battery module 90, and the rigidity of the vehicle body frame 10 with respect to the load in the front-rear direction is increased by the rigidities of the battery case 61 and the battery module 90. Therefore, the rigidity of the battery 60 is ensured, and the rigidity of the entire vehicle is improved.

The battery of the present embodiment is not limited to the straddle-type vehicle of the scooter type, and may be adopted in other types of straddle-type vehicles. The straddle-type vehicle is not limited to a motorcycle, and may be a vehicle in which a battery is installed below the seat.

Further, in the present embodiment, the module fixing portions are formed in the case half body on the right side, but the module fixing portions may be formed in both the case half body on the right side and the case half body on the left side.

In the present embodiment, the battery module is formed in a box shape, but the battery module is not particularly limited as long as the battery module has a shape capable of holding a plurality of battery cells.

In the present embodiment, the case half body on the left side is formed in a box shape, but the case half body on the left side may be formed in a flat plate shape.

In the present embodiment, the battery module is fixed to the case half body on the right side, but the battery module may be fixed to the case half body on the left side. In this case, the case half body on the right side is positioned to a right side of the accommodation space, and the case half body on the left side is positioned at a center of the accommodation space.

In the present embodiment, the front side module fixing portion, the rear side module fixing portion, the upper side module fixing portion, and the lower side module fixing portion are formed on the inner surface of the battery case, but the front side module fixing portion and the rear side module fixing portion may be formed on the inner surface of the battery case.

In the present embodiment, the front side module fixing portion is formed on the opposite side of the front side case fixing portion with a peripheral wall interposed therebetween, and the rear side module fixing portion is formed on the opposite side of the rear side case fixing portion with a peripheral wall interposed therebetween, but a positional relationship between the module fixing portion and the case fixing portion is not particularly limited.

In the present embodiment, the front side module fixing portion is formed on the opposite side of the seat connecting portion with the peripheral wall interposed therebetween, but a positional relationship between the front side module fixing portion and the seat connecting portion is not particularly limited.

In the present embodiment, the battery is fixed to the vehicle body frame, but a battery holder may be fixed to the vehicle body frame, and the battery may be detachably attached to the battery holder.

As described above, the battery (60) of the present embodiment is a battery fixed to the vehicle body frame (10) of the electric straddle-type vehicle (1), and the battery includes: the battery module (90) to which the electric power for traveling is charged; and the battery case (61) accommodating the battery module, in which the front side case fixing portion (73) and the rear side case fixing portion (68, 78) fixed at portions separated in the front-rear direction of the vehicle body frame are formed on the outer surface of the battery case, and the front side module fixing portion (88a to 88c) and the rear side module fixing portion (88d) that fix the front side and the rear side of the battery module are formed on the inner surface of the battery case. According to this configuration, the portions separated in the front and rear of the battery case are connected via the battery module, and the portions separated in the front and rear of the vehicle body frame are connected via the battery case. The rigidity of the battery case with respect to the load in the front-rear direction is increased by the rigidity of the battery module, and the rigidity of the vehicle body frame with respect to the load in the front-rear direction is increased by the rigidities of the battery case and the battery module. Therefore, the rigidity of the battery is ensured, and the rigidity of the entire vehicle is improved.

In the battery of the present embodiment, the upper side module fixing portion (88e) and the lower side module fixing portion (88f, 88g) that fix the upper side and the lower side of the battery module are formed on the inner surface of the battery case. According to this configuration, portions separated in upper and lower parts of the battery case are connected via the battery module. The rigidity of the battery case with respect to a load in the upper-lower direction is increased by the rigidity of the battery module.

In the battery of the present embodiment, the battery case has the left and right split structure including the first case half body (case half body 63 on the right side) and the second case half body (case half body 62 on the left side), and the first case half body fixes the battery module, and the first case half body overlaps the center line extending in the vehicle front-rear direction. According to this configuration, the first case half body to which the battery module as the heavy object is fixed is positioned at a center of the vehicle. Therefore, the left and right weight balances of the vehicle are brought close to uniform, the steering stability is improved, the restoring force when the vehicle is tilted to the left or right is brought close to uniform, and the turning performance during cornering is improved.

In the battery of the present embodiment, the bracket (module bracket 92) to which the circuit component of the battery module is attached is included, and the bracket is fixed to the first case half body, and the circuit component attached to the bracket is covered with the second case half body. According to this configuration, a circuit component lighter in weight than the battery module is positioned on an outer side of a vehicle body, and a weight balance on a center side of the vehicle is larger than that on an outer side of the vehicle, and the steering stability is improved. Since the battery module and the circuit component are attached to the first case half body and the loads of the battery module and the circuit component do not act on the second case half body, the degree of freedom in the shape of the second case half body can be increased.

In the battery of the present embodiment, the battery module overlaps the center line extending in the vehicle front-rear direction. According to this configuration, the battery module as the heavy object is positioned at the center of the vehicle. Therefore, the left and right weight balances of the vehicle are brought close to uniform, the steering stability is improved, rigidities of the left and right of the vehicle body frame are brought close to uniform, and the turning performance during cornering is improved.

In the battery of the present embodiment, the front side module fixing portion (88a) is formed on the opposite side of the front side case fixing portion with the peripheral wall (front wall 84) of the battery case interposed therebetween, and the rear side module fixing portion is formed on the opposite side of the rear side case fixing portion with the peripheral wall (rear wall 85) of the battery case interposed therebetween. According to this configuration, by fixing the battery module to the front side module fixing portion and the rear side module fixing portion, the front side case fixing portion and the rear side case fixing portion are reinforced by the rigidity of the battery module. Therefore, the rigidity of the fixing position of the battery with respect to the vehicle body frame is increased.

In the battery of the present embodiment, the seat connecting portion (72) that supports the seat so as to be openable and closable is formed on the outer surface of the battery case, and the front side module fixing portion (88c) is formed on the opposite side of the seat connecting portion with the peripheral wall (front wall 84) of the battery case interposed therebetween. According to this configuration, since the battery module is fixed to the front side module fixing portion, the seat connecting portion is reinforced by the rigidity of the battery module. Therefore, the rigidity of the seat connecting portion with respect to the load from the seat side is improved. Accordingly, the claims cover all embodiments that may be included within the scope of the technical concepts.

### REFERENCE SIGNS LIST

1: straddle-type vehicle
10: vehicle body frame
34: seat
60: battery
61: battery case
62: case half body on left side (second case half body)
63: case half body on right side (first case half body)
72: seat connecting portion
73: front side case fixing portion
78: rear side case fixing portion
88a to 88c: front side module fixing portion
88d: rear side module fixing portion
88e: upper side module fixing portion
88f, 88g: lower side module fixing portion
90: battery module
92: module bracket (bracket)
94: fuse (circuit component)

## Claims

1. An electric straddle-type vehicle (1) comprising a vehicle body frame (10) with a battery (60), the battery (60) comprising:
a battery module (90) to which electric power for traveling is charged; and
a battery case (61) accommodating the battery module (90),
wherein a front side case fixing portion (73) and a rear side case fixing portion (78) which are configured to be fixed at portions of the vehicle body frame (10) separated in a front-rear direction are formed on an outer surface of the battery case (61),
wherein a front side module fixing portion (88a-88c) and a rear side module fixing portion (88d) that fix a front side and a rear side of the battery module (90) are formed on an inner surface of the battery case (61),
wherein the battery case (61) has a left and right split structure including a first case half body (63) and a second case half body (62), and the first case half body (63) fixes the battery module (90), **characterized in that**
the first case half body (63) overlaps a center line extending in a front-rear direction of the vehicle body frame,
wherein
the battery (60) further comprises a bracket (92) to which a circuit component (94) of the battery module (90) is attached, and
the bracket (92) is fixed to the first case half body (63), and the circuit component (94) attached to the bracket (92) is covered with the second case half body (62).

2. The electric straddle-type vehicle (1) according to claim 1, wherein
an upper side module fixing portion (88e) and a lower side module fixing portion (88f, 88g) that fix an upper side and a lower side of the battery module (90) are formed on the inner surface of the battery case (61).

3. The electric straddle-type vehicle (1) according to claim 1 or 2, wherein
the battery module (90) overlaps the center line extending in the front-rear direction of the vehicle body frame (10).

4. The electric straddle-type vehicle (1) according to any one of claims 1 to 3, wherein
the front side module fixing portion (88a-88c) is formed on an opposite side of the front side case fixing portion (73) with a peripheral wall of the battery case (61) interposed therebetween, and
the rear side module fixing portion (88d) is formed on an opposite side of the rear side case fixing portion (78) with a peripheral wall of the battery case (61) interposed therebetween.

5. The electric straddle-type vehicle (1) according to claim 4, wherein
the straddle-type vehicle (1) includes a seat (34),
a seat connecting portion (72) that supports the seat (34) so as to be openable and closable is formed on the outer surface of the battery case (61), and
the front side module fixing portion (88a-88c) is formed on an opposite side of the seat connecting portion (72) with the peripheral wall of the battery case (61) interposed therebetween.

## Patentansprüche

1. Elektrisches Grätschsitzfahrzeug (1), das einen Fahrzeugkarosserierahmen (10) mit einer Batterie (60) umfasst, wobei die Batterie (60) Folgendes umfasst:
ein Batteriemodul (90), in das elektrische Energie zum Fahren geladen wird; und
ein Batteriegehäuse (61), das das Batteriemodul (90) aufnimmt, wobei ein vorderseitiger Gehäusebefestigungsabschnitt (73) und ein rückseitiger Gehäusebefestigungsabschnitt (78), die dazu ausgelegt sind, an den Abschnitten des Fahrzeugkarosserierahmens (10) getrennt in einer Front-Heck-Richtung befestigt zu werden, an einer Außenfläche des Batteriegehäuses (61) ausgebildet sind,
wobei ein vorderseitiger Modulbefestigungsabschnitt (88a-88c) und ein rückseitiger Modulbefestigungsabschnitt (88d), die eine Vorderseite und eine Rückseite des Batteriemoduls (90) befestigen, an einer Innenfläche des Batteriegehäuses (61) ausgebildet sind,
wobei das Batteriegehäuse (61) eine in links und rechts geteilte Struktur aufweist, die einen ersten Gehäusehalbkörper (63) und einen zweiten Gehäusehalbkörper (62) umfasst, und der erste Gehäusehalbkörper (63) das Batteriemodul (90) befestigt, **dadurch gekennzeichnet, dass**
der erste Gehäusehalbkörper (63) eine in einer Front-Heck-Richtung des Fahrzeugkarosserierahmens verlaufende Mittellinie überlappt, wobei
die Batterie (60) ferner umfassend eine Halterung (92), an der eine Schaltungskomponente (94) des Batteriemoduls (90) befestigt ist, und
die Halterung (92) am ersten Gehäusehalbkörper (63) befestigt ist, und die an der Halterung (92) angebrachte Schaltungskomponente (94) mit dem zweiten Gehäusehalbkörper (62) abgedeckt ist.

2. Elektrisches Grätschsitzfahrzeug (1) nach Anspruch 1, wobei ein oberseitiger Modulbefestigungsabschnitt (88e) und ein unterseitiger Modulbefestigungsabschnitt (88f, 88g), die eine Oberseite und eine Unterseite des Batteriemoduls (90) befestigen, auf der Innenfläche des Batteriegehäuses (61) ausgebildet sind.

3. Elektrisches Grätschsitzfahrzeug (1) nach Anspruch 1 oder Anspruch 2, wobei
das Batteriemodul (90) die in Front-Heck-Richtung verlaufende Mittellinie des Fahrzeugkarosserierahmens (10) überlappt.

4. Elektrisches Grätschsitzfahrzeug (1) nach einem der Ansprüche 1 bis 3, wobei
der vorderseitige Modulbefestigungsabschnitt (88a-88c) auf einer gegenüberliegenden Seite des vorderseitigen Gehäusebefestigungsabschnitts (73) ausgebildet ist, wobei eine Außenwand des Batteriegehäuses (61) dazwischen angeordnet ist, und
der rückseitige Modulbefestigungsabschnitt (88d) auf einer gegenüberliegenden Seite des rückseitigen Gehäusebefestigungsabschnitts (78) ausgebildet ist, wobei eine Außenwand des Batteriegehäuses (61) dazwischen angeordnet ist.

5. Elektrisches Grätschsitzfahrzeug (1) nach Anspruch 4, wobei das Grätschsitzfahrzeug (1) einen Sitz (34) beinhaltet,
ein Sitzverbindungsabschnitt (72), der den Sitz (34) so stützt, dass er geöffnet und geschlossen werden kann, an der Außenfläche des Batteriegehäuses (61) ausgebildet ist, und
der vorderseitige Modulbefestigungsabschnitt (88a-88c) auf einer gegenüberliegenden Seite des Sitzverbindungsabschnitts (72) ausgebildet ist, wobei eine Außenwand des Batteriegehäuses (61) dazwischen angeordnet ist.

## Revendications

1. Véhicule électrique du type à chevaucher (1) comprenant un châssis de carrosserie de véhicule (10) avec une batterie (60), la batterie (60) comprenant :
un module de batterie (90) sur lequel de l'énergie électrique pour le déplacement est chargée ; et
un boîtier de batterie (61) recevant le module de batterie (90), dans lequel une partie de fixation de boîtier côté avant (73) et une partie de fixation de boîtier côté arrière (78) qui sont configurées pour être fixées au niveau de parties du châssis de carrosserie de véhicule (10) séparées dans une direction avant-arrière sont formées sur une surface extérieure du boîtier de batterie (61),
dans lequel une partie de fixation de module côté avant (88a-88c) et une partie de fixation de module côté arrière (88d) qui fixent un côté avant et un côté arrière du module de batterie (90) sont formées sur une surface intérieure du boîtier de batterie (61),
dans lequel le boîtier de batterie (61) a une structure divisée gauche et droite comportant un premier demi-corps de boîtier (63) et un second demi-corps de boîtier (62), et le premier demi-corps de boîtier (63) fixe le module de batterie (90), **caractérisé en ce que**
le premier demi-corps de boîtier (63) chevauche une ligne centrale s'étendant dans une direction avant-arrière du châssis de carrosserie de véhicule, dans lequel
la batterie (60) comprend en outre un support (92) auquel un composant de circuit (94) du module de batterie (90) est fixé, et
le support (92) est fixé au premier demi-corps de boîtier (63), et le composant de circuit (94) fixé au support (92) est recouvert du second demi-corps de boîtier (62).

2. Véhicule électrique du type à chevaucher (1) selon la revendication 1, dans lequel
une partie de fixation de module côté supérieur (88e) et une partie de fixation de module côté inférieur (88f, 88g) qui fixent un côté supérieur et un côté inférieur du module de batterie (90) sont formées sur la surface intérieure du boîtier de batterie (61).

3. Véhicule électrique du type à chevaucher (1) selon la revendication 1 ou 2, dans lequel
le module de batterie (90) chevauche la ligne centrale s'étendant dans la direction avant-arrière du châssis de carrosserie de véhicule (10).

4. Véhicule électrique du type à chevaucher (1) selon l'une quelconque des revendications 1 à 3, dans lequel
la partie de fixation de module côté avant (88a-88c) est formée sur un côté opposé de la partie de fixation de boîtier côté avant (73) avec une paroi périphérique du boîtier de batterie (61) interposée entre elles, et
la partie de fixation de module côté arrière (88d) est formée sur un côté opposé de la partie de fixation de boîtier côté arrière (78) avec une paroi périphérique du boîtier de batterie (61) interposée entre elles.

5. Véhicule électrique du type à chevaucher (1) selon la revendication 4, dans lequel
le véhicule du type à chevaucher (1) comporte un siège (34),
une partie de connexion de siège (72) qui supporte le siège (34) de manière à pouvoir être ouverte et fermée, est formée sur la surface extérieure du boîtier de batterie (61), et
la partie de fixation de module côté avant (88a-88c) est formée sur un côté opposé de la partie de connexion de siège (72) avec la paroi périphérique du boîtier de batterie (61) interposée entre elles.
